# EUROPÄISCHE PATENTANMELDUNG

(11) **EP 1 533 639 A1**
(43) Veröffentlichungstag der Anmeldung: **25.05.2005**
(21) Anmeldenummer: 04027229.6
(22) Anmeldetag: 16.11.2004
(51) Int. Cl.: G02B 21/00, G02B 21/24

(54) **System zur berührungslosen Steuerung von Mikroskopen**

(30) Priorität: 21.11.2003 DE 10354747
(71) Anmelder: Fachhochschule Lübeck, Körperschaft des öffentlichen Rechts, 23562 Lübeck (DE)
(72) Erfinder: Klein, Stephan, 23701 Eutin (DE); Damiani, Christian, 23552 Lübeck (DE)
(74) Vertreter: Biehl, Christian, Dipl.-Phys.

(57) **Zusammenfassung**

Steuerungssystem für ein Mikroskop (50), mit einer Sensoreinheit (100,10), einer Auswerteeinheit (200) und mindestens einer Antriebseinheit (300), wobei die Sensoreinheit mindestens einen Bewegungssensor (30) aufweist, am Mikroskop befestigt und zur Erkennung von Kopfbewegungen des Mikroskopbenutzers auf den Kopf des Mikroskopbenutzers ausgerichtet ist, die Auswerteeinheit zum Berechnen der von der Sensoreinheit empfangenen Daten und zum Übermitteln eines Steuerungssignals an die mindestens eine Antriebseinheit ausgebildet ist und die mindestens eine Antriebseinheit zum Antrieb von Mitteln, die zur Einstellung wenigstens einer physikalischen Eigenschaft des Mikroskops eingerichtet sind, ausgebildet ist.

## Beschreibung

Die Erfindung betrifft ein Steuerungssystem zur berührungslosen Steuerung von eine Kamera oder ein Mikroskop betreffenden Parametern, wie z.B. Fokus, Zoom und Position zum Objekt.

Bei der Handhabung von Kameras und Mikroskopen entsteht oftmals das Problem, dass bestimmte Parameter der Kamera oder des Mikroskops während der visuellen Kontrolle durch den Sucher oder das Okular manuell verändert werden müssen. Dieser manuelle Eingriff führt meist zu einer Beeinträchtigung Kamera- oder Mikroskophandhabung, da nicht nur das Objekt fixiert werden muss, sondern auch die Hände während der manuellen Manipulation beobachtet werden müssen. Insbesondere bei chirurgischen Operationen ist eine manuelle Veränderung von Parametern des optischen Hilfsmittels nicht möglich, da der Chirurg bereits beide Hände für die Durchführung der Operation benötigt und so auf die Hilfe Dritter oder anderer, besonderer Hilfsmittel angewiesen ist. Solche besonderen Hilfsmittel sind z.B. Sensorsysteme, die eine berührungslose Beeinflussung der Parameter eines Mikroskops ermöglichen.

Es sind bereits Systeme bekannt, die eine berührungslose Steuerung von Fokus und Zoom eines optischen Geräts erlauben. Das US-Patent US 6 394 602 B1 beschreibt ein System für Kameras und Mikroskope, das die Blickrichtung des Anwenders über das Okular mit einem Sensor erfasst und die Kamera, das Teleskop oder das Mikroskop in seinem Fokus oder Zoom entsprechend der Blickrichtung beeinflusst. Da die Blickrichtung aus Bildinformationen der Retina des Anwenders bestimmt wird, ist dieses System weitgehend unabhängig von der Kopfbewegung des Anwenders. Der Nachteil ist, dass dieses System sehr aufwendig ist und der Lichtweg der Kamera oder des Mikroskops modifiziert werden muss und dadurch zu einer geringeren Bildqualität des Objekts führt. Des Weiteren führt das Auge natürlicherweise Sakkaden durch, die die Auswertung der Bildinformation beeinflussen und zu unerwünschten Ergebnissen führen können. Die länger anhaltende Fixierung eines Bildpunktes hingegen führt zu schneller Ermüdung und stellt insbesondere bei der Arbeit an Mikroskopen einen großen Nachteil dar.

Es sind auch Systeme bekannt, die eine berührungslose Steuerung der relativen Positionierung eines Mikroskops zum Objekt ermöglichen. Die US Patentanmeldung US 5 345 087 beschreibt ein System zur berührungslosen, räumlichen Positionierung von Operationsmikroskopen. Dafür werden der Kopf des Anwenders und das Okular des Mikroskops mit einer zusätzlichen Übertragungs- und Empfangseinheit versehen, deren relative Lage zueinander die Position des Mikroskops im Raum bestimmt. Der Nachteil besteht darin, dass zur Positionsbestimmung zusätzlich zur Modifikation des Mikroskops auch am Anwender Elemente befestigt werden müssen, die aufgrund falscher Handhabung eine Fehlerquelle darstellen können, die Kosten für solch ein System unnötig erhöhen und bei längerer Anwendung unbequem zu tragen sind.

Die Aufgabe der Erfindung ist es, ein anderes, einfaches und störunanfälliges System zur berührungslosen Steuerung eines Mikroskops zu entwickeln.

Die Aufgabe wird erfindungsgemäß gelöst durch ein Steuerungssystem für Mikroskope mit einer Sensoreinheit, einer Auswerteeinheit und mindestens einer Antriebseinheit, wobei die Sensoreinheit mit der Auswerteeinheit und die Auswerteeinheit mit der mindestens einen Antriebseinheit verbunden ist, die Sensoreinheit mindestens einen Bewegungssensor aufweist, die Auswerteeinheit die von der Sensoreinheit empfangenen Daten verrechnet und ein Steuerungssignal an die mindestens eine Antriebseinheit übermittelt und die mindestens eine Antriebseinheit Mittel antreibt, die die physikalischen Eigenschaften des Mikroskops einstellen.

Das erfindungsgemäße Steuerungssystem für Mikroskope besitzt gegenüber bekannten Systemen den Vorteil, dass eine Steuerung von ein Mikroskop betreffenden Parametern, wie z.B. Vergrößerung, Fokus oder Position zum Objekt, mit einfachen und kostengünstigen Mitteln hinreichend präzise und weitgehend störunanfällig durchgeführt werden kann.

Im Folgenden wird die Erfindung anhand von Zeichnungen erläutert. Es zeigen:
- Fig. 1: eine schematische Darstellung des Steuerungssystems,
- Fig. 2: ein Mikroskop mit Sensoreinrichtung,
- Fig. 3: eine perspektivische Darstellung der Elemente zur Positionierung der Sensoreinrichtung im Verhältnis zum Benutzer, und
- Fig. 4: ein Operationsmikroskop mit Sensoreinrichtung.

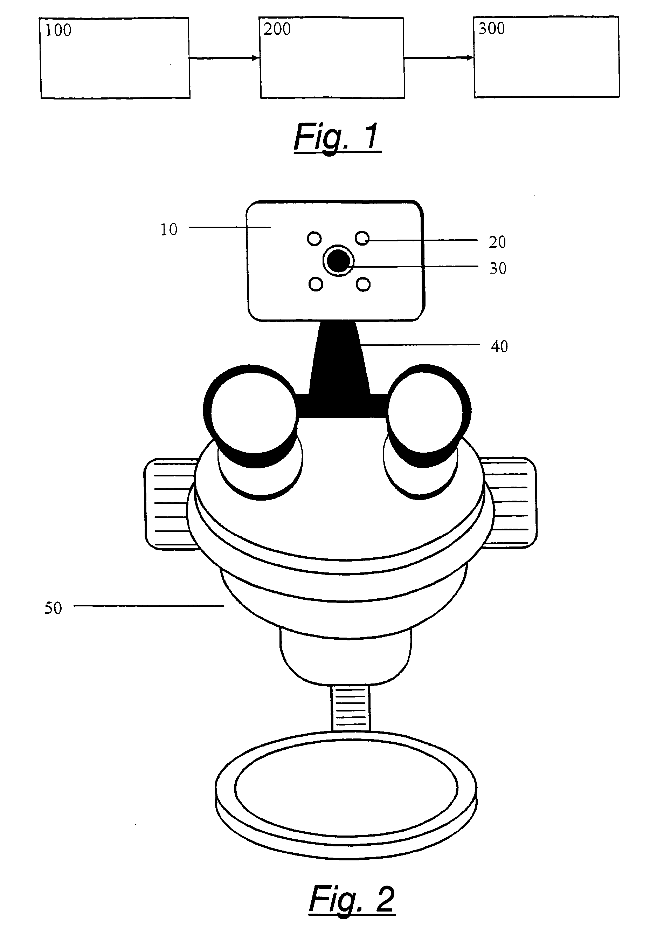

Fig. 1 zeigt den Zusammenhang zwischen den einzelnen Elementen des Steuerungssystems. Die Sensoreinheit 100 ist mit der Auswerteeinheit 200 verbunden, die die von der Sensoreinheit 100 übermittelten Daten auswertet und Steuerbefehle an die mindestens eine Antriebseinheit 300 zum Einstellen der mindestens einen physikalischen Eigenschaft des Mikroskops weiterleitet.

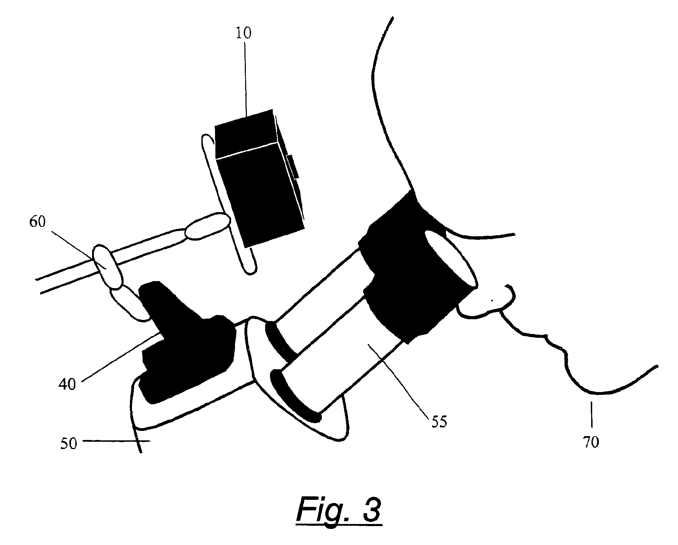

Die Sensoreinheit 100 ist wie in Fig. 2 abgebildet in einem Sensorgehäuse 10 über den Befestigungsarm 40 am Mikroskop 50 angebracht und beinhaltet bevorzugt mindestens eine Leuchtdiode 20 und einen Bewegungssensor 30. Die in Fig. 2 abgebildeten besonders bevorzugt angebrachten vier Leuchtdioden 20 leuchten die Stirnfläche des in Fig. 3 abgebildeten Mikroskopbenutzers 70 im Bereich des für den Bewegungssensor relevanten Bereichs gleichmäßig aus. Der Bewegungssensor 30 (z.B. ein ADNS 2030 von Agilent Technologies) registriert die Bewegungen der Stirnfläche des Mikroskopbenutzers 70 sowohl in x- als auch in y-Richtung. Durch Hinzufügen weiterer Bewegungssensoren ist es in einer besonders bevorzugten Ausführung auch möglich, Rotationsbewegungen in der Ebene der Stirnfläche zu bestimmen.

Durch Programmierung der Auswerteeinheit 200 wird vorgegeben, welche Eigenschaft des Mikroskops durch die vom Bewegungssensor erfassten Daten beeinflusst werden sollen. Neben das Mikroskop betreffenden physikalischen Eigenschaften, wie z.B. Vergrößerung, Fokus, Blendeneinstellungen, Beleuchtung oder Position zum Objekt, ist es prinzipiell auch möglich mit dem Steuerungssystem die Mikroskopierumgebung, also andere Geräte als das Mikroskop zu steuern. In einer bevorzugten Ausgestaltung der Erfindung kann die zu verändernde physikalische Eigenschaft des Mikroskops über einen oder mehrere Schalter ausgewählt werden. Durch diese Auswahl wird der Steuerungsbefehl der Auswerteeinheit 200 and die die Auswahl betreffende Antriebseinheit 300 weitergeleitet, die die Einstellung mit geeigneten Mitteln vornimmt. Des Weiteren ist es möglich, das Steuerungssystem über einen Schalter zu deaktivieren. Dieses ist insbesondere dann wichtig, wenn der Mikroskopbenutzer 70 den Arbeitsplatz, ohne die vorgenommenen Einstellungen verändern zu wollen, verlassen will bzw. damit während der Arbeitsphase unbeabsichtigte Bewegungen des Kopfes keinen Einfluss auf die vorgenommenen Einstellungen haben.

In einer bevorzugten Ausführungsform der Erfindung enthält die Sensoreinheit 100 zusätzlich einen Abstandssensor, der bei Überschreitung des Abstands zwischen Bewegungssensor und Mikroskopbenutzer 70 durch akustische oder optische Signale meldet, dass das erfindungsgemäße Steuerungssystem inaktiv ist. Das Überschreiten eines Abstands und die Registrierung durch den Abstandssensor können also bevorzugt als Schalter wirken, der, wie oben beschrieben, das Steuerungssystem deaktiviert. In einer besonders bevorzugten Ausgestaltung ist vorgesehen, dass der Abstandssensor über die Auswerteeinheit 200 eine am Befestigungsarm 40 angebrachte, geeignete Antriebseinheit 300 ansteuert, die die Sensoreinheit 100 bei Überschreiten eines definierten Abstands nachführt und so in einem konstanten Abstand zum Mikroskopbenutzer 70 hält.

Fig. 3 zeigt die schematische Darstellung aus Fig. 2 in einer perspektivischen Ansicht bei der Benutzung des Mikroskops. Die Sensoreinheit 100 wird durch die Haltevorrichtung 60, die über die Befestigungsvorrichtung 40 mit dem Mikroskop verbunden ist, in räumlicher Nähe zur Stirn eines durch das Okular 55 blickenden Betrachters 70 positioniert. Dabei besteht die Haltevorrichtung 60 aus einem gelenkartig verbundenen Stangensystem, das eine Drehung der Sensoreinheit 100 in alle Richtungen erlaubt. Zusätzlich kann die Sensoreinheit 100 in ihrer Entfernung zum Betrachter 70 und in ihrem Abstand vom Mikroskop (der Höhe) verändert werden. Um zu gewährleisten, dass das System optimal und störungsfrei arbeitet, ist darauf zu achten, dass die Sensoreinheit 100 in räumliche Nähe zur Stirn des Benutzers 70 gebracht wird.

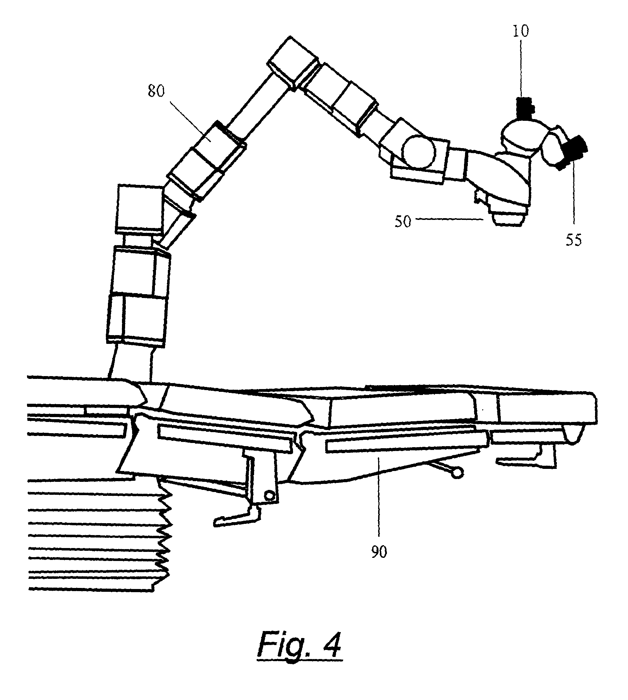

Eine weitere Anwendung des erfindungsgemäßen Steuerungssystems ist in Fig. 4 dargestellt. Hier befindet sich die Sensoreinheit 100 in der Nähe zum Okular 55 eines Operationsmikroskops, das über einen Roboterarm 70 an einem Operationstisch 80 befestigt ist. Der Operateur von Operationen bei denen ein Mikroskop benötigt wird, sieht sich oftmals vor das Problem gestellt, dass er sich mit den von Hand geführten Operationsinstrumenten im Operationsbereich befindet, gleichzeitig aber eine Justierung der Position oder anderer Parameter des Operationsmikroskops vornehmen muss. Das erfindungsgemäße Steuerungssystem ermöglicht die berührungslose Positionierung des Operationsmikroskops, wobei die oben genannten besonders vorteilhaften Ausgestaltungsmerkmale hier ebenso wirken.

## Patentansprüche

1. Steuerungssystem für ein Mikroskop (50), mit einer Sensoreinheit (100), einer Auswerteeinheit (200) und mindestens einer Antriebseinheit (300), **dadurch gekennzeichnet, dass**
die Sensoreinheit (100) mindestens einen Bewegungssensor (30) aufweist, am Mikroskop befestigt und zur Erkennung von Kopfbewegungen des Mikroskopbenutzers (70) auf den Kopf des Mikroskopbenutzers (70) ausgerichtet ist,
die Auswerteeinheit (200) zum Berechnen der von der Sensoreinheit (100) empfangenen Daten und zum Übermitteln eines Steuerungssignals an die mindestens eine Antriebseinheit (300) ausgebildet ist und
die mindestens eine Antriebseinheit (300) zum Antrieb von Mitteln, die zur Einstellung wenigstens einer physikalischen Eigenschaft des Mikroskops (50) eingerichtet sind, ausgebildet ist.

2. Steuerungssystem nach Anspruch 1, **dadurch gekennzeichnet, dass** die Antriebseinheit (300) zum Antrieb von Mitteln ausgebildet ist, die zur Einstellung der Vergrößerung, des Fokus, der Position zum Objekt oder der Beleuchtungseigenschaften des Mikroskops (50) eingerichtet sind.

3. Steuerungssystem nach einem der vorangehenden Ansprüche, **dadurch gekennzeichnet, dass** die Sensoreinheit (100) zusätzlich mindestens eine Leuchtdiode (20) enthält.

4. Steuerungssystem nach einem der vorangehenden Ansprüche, **dadurch gekennzeichnet, dass** die Sensoreinheit (100) zusätzlich mindestens einen weiteren auf den Kopf des Mikroskopbenutzers (70) gerichteten Abstandssensor enthält.

5. Steuerungssystem nach einem der vorangehenden Ansprüche, **dadurch gekennzeichnet, dass** die Sensoreinheit (100) mindestens einen weiteren auf den Mikroskopbenutzer (70) gerichteten Bewegungssensor enthält.

6. Steuerungssystem nach einem der vorangehenden Ansprüche, **dadurch gekennzeichnet, dass** das Steuerungssignal der Auswerteeinheit (200) zu einer Antriebseinheit (300) mittels mindestens eines Schalters zugewiesen wird.

7. Steuerungssystem nach einem der vorangehenden Ansprüche, **dadurch gekennzeichnet, dass** das Steuerungssystem über mindestens einen Schalter an- und abgeschaltet wird.
